# FASCICULE DE BREVET EUROPEEN

(11) **EP 0 957 461 B1**
(45) Date de publication et mention de la délivrance du brevet: **12.12.2001**
(21) Numéro de dépôt: 99400995.9
(22) Date de dépôt: 23.04.1999
(51) Int. Cl.: G07F 7/10

(54) **Procédé de personnalisation d'une carte à puce**
Verfahren zur Personalisierung einer IC-Karte
IC-Card personalization process

(30) Priorité: 14.05.1998 FR 9806107
(43) Date de publication de la demande: 17.11.1999
(73) Titulaire: SAGEM S.A., 75015 Paris (FR)
(72) Inventeur: Heurteaux, Frédéric M., Cabinet Ch. SCHMIT et Ass., 95000 Cergy (FR)
(74) Mandataire: Schmit, Christian Norbert Marie

(56) Documents cités:
- EP-A- 0 152 024
- EP-A- 0 361 491
- EP-A- 0 730 253
- DE-A- 19 507 044
- DE-A- 19 633 466
- FR-A- 2 687 816

## Description

La présente invention a pour objet un procédé de personnalisation d'une carte à puce qui est destiné à être mis en oeuvre par une personne quelconque. Le but de l'invention est ainsi de favoriser la diffusion des cartes à puce en facilitant la programmation, notamment dans le cadre d'applications multiples, du type Java Card par exemple.

On connaît dans le domaine de la carte à puce les fabricants de cartes à puce, les prestataires de services ou vendeurs de biens, et les utilisateurs. Un fabricant de cartes à puce, typiquement, réalise ou fait réaliser un circuit intégré comportant un microprocesseur, un ensemble de mémoires à accès aléatoire programmables et/ou non programmables, et une interface de sortie en liaison avec un connecteur, voire un circuit de transmission hertzienne. Le fabricant est encore généralement responsable de la mise en place du module électronique ainsi constitué dans une carte à puce ou plus généralement dans un support à puce.

Quand on utilisera le terme carte à puce dans la suite de cet exposé, il faudra comprendre support à puce, ce dernier pouvant avoir toutes les formes requises : la forme standard d'une carte, la forme du jeton normalisé utilisable dans les téléphones de type GSM, une clé à puce utilisable dans un décodeur de télévision, voire celle d'une bague, etc....

Dans une mémoire non volatile du circuit intégré, le fabricant installe par ailleurs un système d'exploitation de ce circuit intégré. Ce système d'exploitation est susceptible de gérer l'accès aux mémoires, à l'interface de communication et aux périphériques (horloge, compteur...) du microprocesseur. Il est aussi capable de contrôler l'exécution de certaines opérations essentielles. En général, pour des raisons de sécurité, le système d'exploitation est ainsi capable d'effectuer, en interne, une comparaison d'un code secret présenté sur l'interface avec un code secret mémorisé dans une mémoire secrète. En particulier seul le microprocesseur peut accéder à cette mémoire secrète, sans possibilité d'éditer ce code secret sur un bus externe du circuit intégré. La vérification, en cas de succès, autorise la continuation de la procédure.

Le système d'exploitation possède aussi une fonction de supervision par laquelle il permet à un utilisateur de modifier le contenu de certaines mémoires, notamment d'une mémoire programme en vue d'y inscrire des instructions d'un programme, d'une application ou des paramètres d'utilisation de ce programme, notamment des limites d'utilisation d'une mémoire de données dévolues à cette application.

Le fabricant de cartes à puce transmet ensuite les cartes à puce à un prestataire de services par exemple une banque (ou à un vendeur de biens). Dans la suite de cet exposé prestataire signifie tout organisme qui gère des transactions. Le prestataire effectue la personnalisation de la carte en y enregistrant des programmes spécifiques à sa prestation de services. Ainsi, ces programmes peuvent comporter, dans le cas d'une application pour une banque, des programmes permettant le retrait d'argent à un distributeur automatique de billets de banque, la visualisation d'un compte en banque correspondant à la carte, l'émission de virements bancaires, et ainsi de suite. En outre, les programmes de l'application du prestataire comportent généralement un programme de sécurisation propre à ce prestataire. Pour effectuer cette personnalisation, le prestataire doit avoir accès à la fonction de supervision (voir per exemple FC-A-2687 816).

Bien entendu, il, n'est pas question que les possibilités offertes aux prestataires de modifier le contenu de la carte, soient ultérieurement offertes à l'utilisateur de la carte. Si c'était le cas, on pourrait imaginer que cet utilisateur, particulièrement habile, falsifierait les programmes du prestataire au point de se faire octroyer des avantages indus. Pour empêcher de tels agissements, un mécanisme double a été mis en place.

Dans une première phase, le mécanisme de personnalisation nécessite l'indication, par le prestataire, d'un code spécifique d'accès à la personnalisation. En cas de succès de la présentation de ce code spécifique de personnalisation, le prestataire a accès à des fonctions débridées du système d'exploitation et peut alors organiser en conséquence la mémoire programme et la mémoire de données, pour des parties applicatives bien entendu.

Dans une deuxième phase, lorsque le prestataire a terminé les opérations de personnalisation de la carte, il peut verrouiller l'accès à cette fonction de personnalisation. En général, le verrouillage est de type irréversible. Il comporte par exemple le brûlage d'un fusible ou le basculement dans un état irréversible d'une bascule électronique comportant des cellules de mémoire non volatiles écrites dans un état (programmé ou effacé) alors qu'il n'existe pas de circuit dans la mémoire pour les écrire dans l'autre état.

Il est apparu nécessaire, pour sécuriser les opérations de personnalisation, que le code d'accès à la fonction de supervision ou plus généralement à une fonction de personnalisation de la carte, soit secret et ne soit communiqué qu'avec certaines précautions au prestataire. En pratique, on s'est par exemple arrangé pour que les cartes à puce arrivent dans la possession du prestataire par un moyen de transport, par exemple un camion de livraison, alors que les codes d'accès secrets d'accès arrivent à ce prestataire par un autre chemin, par exemple par la poste. Pour la personnalisation, le prestataire attribue à chaque carte un code secret d'accès. Par exemple il effectue la correspondance carte-code d'accès en recherchant dans une liste les numéros de série des cartes à puce et en trouvant les codes secrets indiqués en regard de ces numéros de série.

Il est connu par ailleurs que les codes d'accès ne soient même pas utilisables tels quels. Ils sont alors chiffrés et le prestataire doit utiliser une machine de déchiffrement pour pouvoir disposer, pour chaque carte individuellement, de son code d'accès en supervision. La machine de déchiffrement fait de son côté l'objet d'une convention entre le fabricant et le prestataire.

On conçoit que ce système, tout en étant sécurisé et dicté par l'expérience, ne soit pas favorable à une diffusion massive des cartes à puce. Il n'est par exemple pas envisageable qu'une petite société, par exemple gestionnaire d'un parking municipal, adopte une manière de faire aussi compliquée pour mettre à la disposition de peu d'utilisateurs un service dont elle peut avoir par ailleurs une possibilité d'empêcher les abus en cas de détérioration du système. De ce fait, ces prestataires utilisent des procédés où les informations d'autorisation ou d'utilisation du service sont mémorisées dans des cartes magnétiques, bien plus faciles à programmer. L'inconvénient de ces cartes magnétiques est évidemment qu'elles sont, de ce fait même, très fragiles vis à vis de la fraude et que ces systèmes ne sont vraiment pas suffisamment résistants.

Dans l'invention, on a cherché à mettre à la disposition des prestataires, prestataires quelconques notamment des petites sociétés, des cartes à puce avec toute la sécurité que ces cartes à puce comportent, sans avoir à imposer à ces prestataires de rentrer dans une relation privilégiée avec un fabricant, sans avoir à supporter les contraintes des séries de cartes pour lesquelles en principe des machines de chiffrement ou déchiffrement des codes secrets sont prévues. Le but de l'invention est de permettre la vente de cartes à puce vierges, à l'unité, avec une possibilité de programmation complète par l'utilisateur-prestataire sans avoir de compte à rendre à qui que ce soit. Mais en profitant bien entendu de la sécurité d'accès en programmation.

Selon l'invention, on atteint ce but d'une façon très simple. On a prévu que, tout simplement, le code d'accès à une fonction de supervision de la carte sera d'une part contenue dans la carte, et d'autre part édité lors d'une première liaison, ou lors de premières liaisons de la carte avec un terminal de lecture de cette carte. Ce faisant, ce code secret est ainsi édité et peut être disponible au profit du prestataire. Celui-ci profite de l'apparition fugitive de cette édition pour le noter par ailleurs et le réutiliser par la suite pour personnaliser sa carte aussi souvent qu'il le veut.

On conçoit immédiatement qu'un utilisateur de carte veuille alors être capable de modifier lui-même sa propre carte, en lieu et place du prestataire précédent, pour y incorporer ou non les services d'un ou de plusieurs prestataires, société de gestion de parking, société de gestion d'une salle de cinéma, ainsi de suite. De ce fait l'utilisateur gérera l'aspect multi-utilisation de sa carte à puce. Bien entendu, les possibilités offertes à l'utilisateur lui-même peuvent également être offertes au prestataire qui peut acheter de cette façon un lot de cartes et les programmer en conséquence. Selon l'invention, seul peut modifier la potentialité de la carte celui qui dispose du code d'accès en supervision-personnalisation. La supervision peut ainsi être plus restreinte qu'une personnalisation notamment si, en personnalisation, on autorise une partition de la mémoire, alors qu'en supervision on n'autorisera qu'une utilisation de partitions déjà formées.

L'invention a donc pour objet, un procédé de personnalisation d'une carte à puce dans lequel
- on munit la carte à puce d'une fonction de supervision,
- on protège l'accès à cette fonction par une vérification d'un code d'accès,
- on relie un terminal de commande à la carte à puce, et
- on met en oeuvre la fonction de supervision pour personnaliser la carte à puce,
caractérisé en ce que
- on teste une liaison de la carte à puce au terminal pour savoir s'il s'agit d'une première liaison, et
- si c'est une première liaison, on révèle un code d'accès de supervision de la carte à puce.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1 : une carte à puce et un terminal de lecture de cette carte à puce utilisable pour mettre en oeuvre le procédé de l'invention,
Figure 2 : les principales étapes du procédé de l'invention,
Figure 3 : une représentation schématique d'un perfectionnement du procédé selon l'invention.

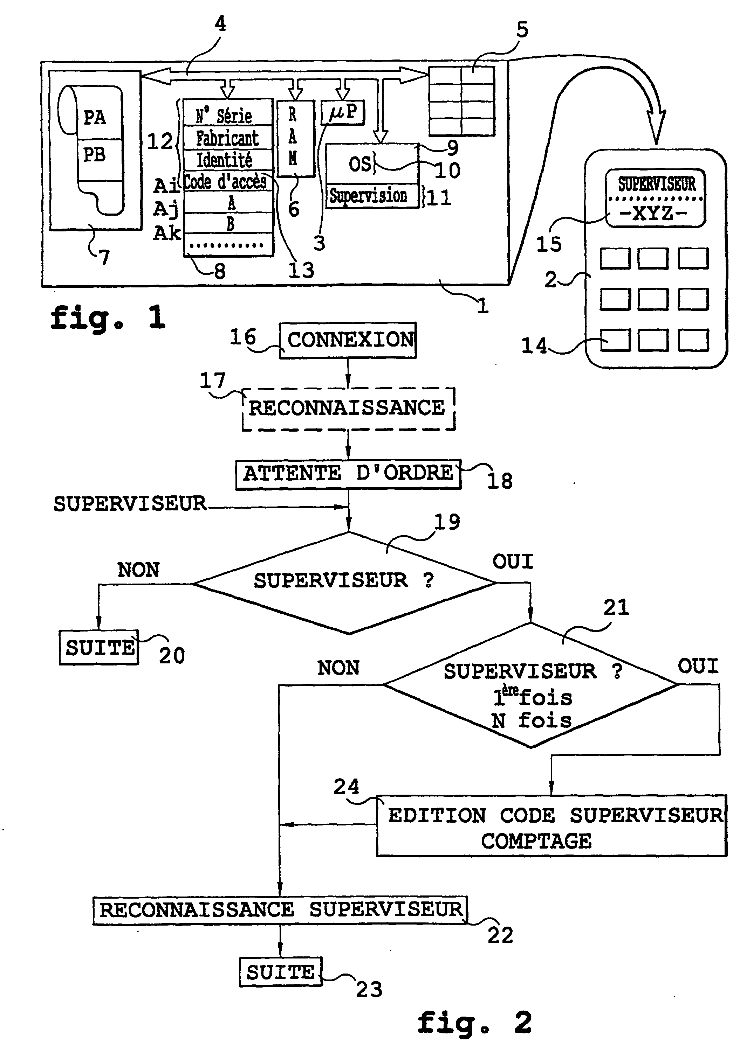

La figure 1 montre une carte à puce 1 et un lecteur 2 de cartes à puce utilisable pour mettre en oeuvre le procédé de l'invention. La puce de la carte 1 comporte d'une manière classique, un microprocesseur 3 en relation par l'intermédiaire d'un ou de plusieurs bus 4 de commande, d'adresses, et de données, avec une interface d'entrée sortie 5 (par exemple tout simplement un connecteur normalisé), une mémoire de travail 6, une mémoire programme 7, une mémoire de données 8 et une mémoire 9 contenant le système d'exploitation.

D'une manière habituelle, la mémoire 6 sera constituée de registres volatiles munis de cellules mémoires de type statique (éventuellement dynamique). Les mémoires 7 et 8 seront normalement des mémoires non volatiles, programmables, au moins pour une partie de leur contenu. Elles seront constituées par exemple à base de cellules mémoires non volatiles du type EEPROM avec un transistor à grille flottante dans le dispositif de mémorisation. La mémoire 9 qui comporte le système d'exploitation, sera normalement une mémoire non volatile obtenue par masquage. Elle peut néanmoins être une mémoire du type PROM qui peut être programmée mais pas effacée. Eventuellement, la mémoire 9 pourra n'être qu'une sous-partie, avec un adressage particulier, de la mémoire 7, de la mémoire 8 ou de l'ensemble de ces deux-là.

La mémoire 9 comporte une partie 10 du système d'exploitation permettant les accès les plus puissants dans le système représenté. La mémoire 9 peut comporter par ailleurs, une partie 11 de supervision dont la potentialité peut être limitée par rapport à celle de la partie 10. En pratique les parties 10 et 11 ne sont pas géographiquement individualisées dans la mémoire 9. Les instructions qui y sont enregistrées subissent des filtrages réalisés par les circuits du microprocesseur qui autorise ou non leur exécution. En pratique, les instructions utilisables en supervision sont des macro-instructions des instructions du système d'exploitation : leur nombre est cependant limité et la nature même de ces macro-instructions limite le mode de supervision. Il serait néanmoins envisageable de disposer d'un mode de supervision qui donne accès à toutes les fonctions du système d'exploitation de base.

D'une manière préférée envisagée dans l'invention, les fonctions de supervision du système d'exploitation seront des fonctions avec lesquelles il sera possible d'écrire ou d'effacer dans la mémoire 7 de programme, alors que, normalement, ceci n'est pas permis à un utilisateur. Elles seront également des fonctions avec lesquelles il sera possible de déterminer des allocations dans la mémoire de données 8, notamment par des adresses de départ et de fin Ai, Aj et Ak pour des données relatives à des applications A ou B et correspondant à des programmes PA et PB stockés dans la mémoire 7.

La mémoire 8 comporte, notamment dans une partie 12 dans laquelle on ne peut pas ou plus, écrire : le numéro de série de la carte, le code fabricant, le code identité ou autres, ainsi qu'un jeu de codes d'accès dans une zone 13 de la partie 12. Hormis cette zone 13, les autres zones sont optionnelles dans l'invention.

La carte à puce 1 est destinée à être mise en relation avec un lecteur 2 dont la structure fonctionnelle interne est sensiblement la même que celle de la carte 1. En outre, le lecteur 2 possède un jeu de boutons de commande 14 et un écran de visualisation 15 avec lesquels on peut contrôler et afficher des commandes permettant la transaction avec la carte. Le lecteur 2, selon l'invention, sera au minimum un lecteur élémentaire. Dans un exemple, le lecteur 2 sera un lecteur du type lecteur de contrôle du nombre d'unités téléphoniques encore disponibles dans une carte téléphonique (qui est une simple carte à mémoire). Dans la pratique, il s'agira plus vraisemblablement d'un micro-ordinateur avec lequel le prestataire ou l'utilisateur personnalisera la carte à puce.

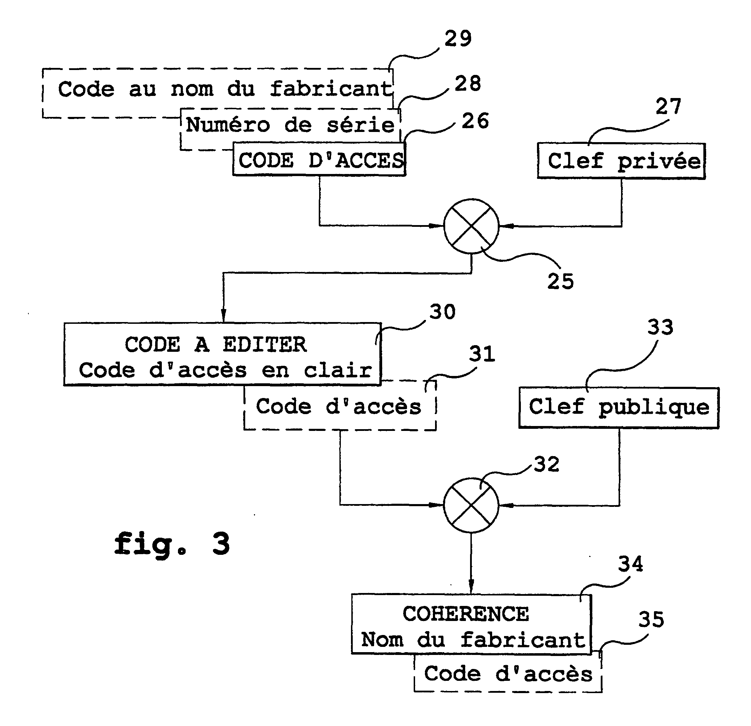

La figure 2 montre les étapes essentielles du procédé de l'invention. Au cours d'une première étape 16, la carte à puce est connectée au connecteur du lecteur 2. Il s'ensuit un certain nombre d'opérations, normalement gérées par le système d'exploitation 10, consistant à vérifier que la mise sous tension du circuit intégré est correcte, que la tension d'alimentation est correcte, que la fréquence produite par l'horloge interne du microprocesseur 3 est correcte, et ainsi de suite. Une fois que ces opérations purement physiques ont été lancées, l'opération de connexion se poursuit généralement par une opération 17 de reconnaissance. L'opération 17 de reconnaissance est une opération classique qui consiste à demander à un opérateur, le prestataire ou un utilisateur, de composer un code secret. Cette composition de code secret est comparée par le microprocesseur 3 à un des codes secrets stockés en zone 13. La comparaison est complexe et comporte généralement le chiffrement du code présenté par un algorithme de type DES ou RSA paramétré par une clef de session. Pour la simplicité de l'explication on peut néanmoins admettre que la comparaison est directe.

Si cette comparaison est positive, la suite des opérations peut se dérouler. Sinon, le microprocesseur se branche sur une instruction du système d'exploitation qui ne peut que provoquer l'échec de la transaction et qui refuse toute autre intervention. En général, le nombre d'échec est comptabilisé, et au bout d'un nombre limité d'échecs, par exemple trois, le système d'exploitation 10 provoque le basculement d'une information dans la zone 13 de code d'accès pour verrouiller la carte.

Le programme de vérification du code secret peut être contenu dans la partie 10 du système d'exploitation 9. Eventuellement, il pourrait être stocké dans une partie de la mémoire 7 mais cela nécessiterait par ailleurs, de bloquer l'accès à cette partie de mémoire.

Lorsque la reconnaissance a été réussie, dans la mesure où elle a été lancée parce qu'elle n'est pas nécessaire à l'invention, le microprocesseur 3 se met en une opération 18 en attente d'ordre. En définitive, il attend un message provenant du lecteur 2. Si le message qui provient du lecteur 2 est un message de requête de supervision ou un message analogue tendant à faire exécuter par le microprocesseur 3 les macro-instructions de la partie 11 du système d'exploitation 9, on se trouve dans une configuration où l'utilisateur ou le prestataire veut personnaliser la carte. Aussi, dans un test 19, après la phase 18 d'attente d'ordre, le microprocesseur 3 cherchera à savoir si l'ordre qu'il reçoit est un ordre de supervision de la carte ou non. Si ce n'est pas le cas, une suite du traitement sera lancée dans une opération 20. Cette suite comporte d'autres tests et d'autres opérations.

Par contre, si c'est le cas, dans l'invention le microprocesseur 3 en exécution d'instructions spécifiques de son système d'exploitation 9, lancera un deuxième test 21. Le test 21 a pour objet de savoir si l'accès en mode supervision de la carte est effectué pour la première fois ou non. Si ce n'est pas la première fois, le système d'exploitation 10 demandera, en une opération 22, à l'opérateur d'indiquer le code secret d'accès en mode supervision (qui est différent normalement du code secret de reconnaissance générale de l'étape 17). Si cette reconnaissance se produit avec succès, le mode de supervision est ouvert dans une suite 23 d'opérations. Comme indiqué précédemment, cette suite d'opérations 23 pourra comporter un téléchargement d'une application PB dans la mémoire 7. Ce téléchargement peut être effectué à titre d'essai. Il pourra comporter une activation définitive d'une application qui aura été téléchargée provisoirement. II pourra comporter par ailleurs, la modification d'une application PA existante. Ce type d'opération est connu dans l'état de la technique.

Par contre, si l'accès en mode de supervision est effectué pour la première fois, la partie 10 du système d'exploitation 9 spécifique à l'invention va lancer une macro-instruction 24. La macro-instruction 24 comporte deux parties essentielles.

Premièrement, elle va provoquer la révélation, notamment, l'édition, du code d'accès en supervision. Par exemple, cette macro-instruction consistera à aller lire dans la zone 13 le code d'accès en supervision (ou en personnalisation) et à l'afficher sur l'écran 15 du lecteur 2. Dans ce cas l'opérateur doit noter et conserver par-devers lui, le code secret d'accès édité. Au besoin, on pourra prévoir que cette édition résulte en une inscription de ce code d'accès dans un fichier contenu dans la mémoire 8 ou dans le lecteur 2. Par la suite, l'opérateur pourrait accéder aussi souvent qu'il le voudrait à ce fichier pour connaître son code d'accès en supervision (de programmation en personnalisation de la mémoire 7 et de la mémoire 8).

A l'issue de l'opération 24, étant donné que maintenant l'opérateur dispose du code secret d'accès, il pourra lancer à nouveau l'instruction 22 et la suite des opérations 23 comme vu ci-dessus.

La macro-instruction 24 comporte par ailleurs, une deuxième partie essentielle de comptage. En effet, pour savoir si l'accès en supervision a déjà été effectué, il faut l'avoir préalablement compté. Aussi, dans la macro-instruction 24, organisera-t-on un comptage. Ce comptage peut être limité à un. Dans ce cas, on ne peut avoir accès qu'une seule fois par le test 21 à la macro-instruction 24 qui provoque l'édition du code d'accès en supervision. Par contre, si le comptage est plafonné à une valeur N, le test 21 lancera la macro-instruction 24 tant que le comptage n'aura pas atteint cette valeur N. Le résultat du comptage effectué par la macro-instruction 24 sera par exemple stockée dans la mémoire 8 dans une zone 13 protégée. Pour résister à la fraude, il est préférable que l'opération de comptage soit préalable à l'opérateur d'édition. En effet, en agissant ainsi, on évite de donner plus d'accès en supervision que prévu. Il est connu en effet que les fraudeurs tentent de retirer les cartes 1 des lecteurs 2 dès qu'ils ont acquis l'information qui les intéresse, avant que cette acquisition ne leur soit comptée. Dans l'invention on évite cette pratique en comptabilisant l'édition avant même de la lancer.

Tel qu'on l'a décrit, le test 21 est successif à un test 19 au cours duquel on cherchait à savoir si l'intervention de l'opérateur était une demande de mise en oeuvre d'un mode de supervision de la carte à puce ou non. Ce mode est un mode préféré. Cependant, il pourrait être envisagé que le test 21 soit lancé directement après la phase 16 de connexion. Dans ce cas, l'opération 24 éditerait le code secret d'accès en supervision, en fonction du comptage à N, même si les velléités du prestataire ne sont pas à ce moment d'effectuer une personnalisation de la carte.

L'enchaînement de la macro-instruction 22 sur la macro-instruction 24 pourra être effectué soit en ayant une édition temporisée si le code secret d'accès en supervision X Y Z est montré fugitivement sur l'écran 15 du terminal 2, soit sous une forme positive en demandant un acquit (exécuté sous la forme d'un appui sur une touche de validation ou d'une touche entrée) à l'opérateur avant de passer à la macro-instruction 22.

La figure 3 montre un mode préféré d'édition du code secret d'accès en supervision. De préférence, ce code d'accès en mode supervision sera chiffré. Dans l'exemple, un algorithme de chiffrement 25 permettra au fabricant de modifier le code secret d'accès 26 en fonction d'une clé privée 27 détenue par le fabricant et que ce dernier garde strictement confidentielle. De préférence, l'opération de chiffrage 25 pourra comporter le chiffrage du code d'accès 26, du numéro de série 28 de la carte, ainsi que de celui du code ou du nom du fabricant 29. Le mot codé chiffré, et qui est stocké dans le registre 13 par le fabricant, comporte donc d'une manière implicite une information de code d'accès, l'information de numéro de série, et/ou l'information de références du fabricant.

De ce fait, l'édition ultime du code secret provoqué au cours de la macro-instruction 24, présentera un code d'accès 30 chiffré. Dans ce code d'accès chiffré, le code d'accès lui-même, X Y Z, peut apparaître en clair. Mais il peut aussi être suivi ou précédé d'une suite de caractères résultant du chiffrage par l'algorithme 25. Ou bien, le code d'accès X Y Z sera lui-même chiffré et n'apparaîtra pas en clair. Dans ce cas, son édition 31 ne permettra pas de déterminer, en elle-même, le code d'accès de supervision.

Dans ce dernier cas, dans une machine 32 de déchiffrage, on mettra en oeuvre un algorithme de déchiffrage du contenu de ce qui a été édité à l'instruction 24 (le code 30 avec le code X Y Z en clair et les caractères supplémentaires, ou le code 31 chiffré). Ce déchiffrage sera lui-même paramétré par une clé publique 33. La clé publique 33 est associée à la clé privée 27. Elle permet selon le code 30 ou le code 31 introduit, de produire un message de cohérence 34 ou le code d'accès en mode de supervision 35, lui-même en clair, respectivement.

Par exemple, le message de cohérence 34 pourra comporter la révélation du nom du fabricant. Dans la mesure où ce fabricant est un fabricant connu, et où par exemple son nom apparaît sur un graphisme imprimé sur la carte à puce, le prestataire ou plus généralement l'utilisateur peut authentifier la provenance de la carte à puce qu'il a achetée et non pas se satisfaire seulement du graphisme apparent sur la carte. En effet, il faut absolument empêcher que des systèmes d'exploitation 10, imaginés par des escrocs, puissent provoquer à un moment donné, la communication (notamment par des voies de communication en transmission) de codes secrets de carte. Cette communication permettrait ainsi à ces escrocs de les utiliser frauduleusement. Ainsi, si le nom du fabricant 29 a été chiffré par la clé privée 27 dans l'algorithme 25, ce nom apparaît, d'une manière implicite, dans les messages 30 ou 31. Le déchiffrement par la clé publique 33 dans la machine 32 provoquera l'édition du nom du véritable fabricant. Il est évident qu'un fraudeur, s'il ne possède pas la bonne clé privée, ne peut stocker dans la carte que des messages 30 ou 31 incohérents. L'utilisateur ou le prestataire qui se procure alors la clé publique, par exemple par connexion sur le site Internet du fabricant, ne verra pas apparaître le nom du fabricant que cette clé publique devrait permettre de révéler. En effet cette clef publique ne va pas correspondre à la clé privée utilisée par le fraudeur puisque celui-ci ignore la clef privée secrète détenue par le fabricant. En outre, si au lieu de provoquer l'édition d'un message 30 comportant le code d'accès en clair, l'algorithme 25 provoque l'édition d'un message 31 dans lequel le code d'accès est chiffré, le code qu'il finira par obtenir dans le message 35, n'aura aucune raison de convenir à la carte concernée. Celle-ci sera donc perdue.

La mise en oeuvre de l'algorithme 25 est effectuée chez le fabricant. La mise en oeuvre du déchiffrage 32 peut être effectuée dans le lecteur 2. En variante, elle peut être effectuée par le microprocesseur 3 qui lirait alors les instructions nécessaires à cet algorithme 32 dans la partie 10 de la mémoire 9 du système d'exploitation. Les algorithmes 25 et 32 peuvent par ailleurs ne pas concerner du tout le code d'accès. Ainsi un fabricant connu peut livrer des paires message à chiffrer - message en clair. Si la carte est une carte authentique, si elle comporte l'algorithme 32 du fabricant, le déchiffrage du message à chiffrer donnera le message en clair. L'utilisateur pourra alors se convaincre que sa carte est authentique. Afin de ne pas fragiliser l'algorithme vis-à-vis de son décryptage, le nombre de paires pourra être limité. En variante, les opérations de la figure 3 peuvent être faites en dehors de la carte, par exemple sur un site Internet.

Au besoin, comme pour les codes de reconnaissance, le code d'accès en supervision peut être modifié par l'utilisateur à sa convenance. De plus, lorsque le code d'accès est édité dans un fichier, on peut effectuer un verrouillage de ce fichier, pour en interdire définitivement l'accès ou pour autoriser l'accès à ce fichier sous certaines conditions.

## Revendications

1. Procédé de personnalisation d'une carte (1) à puce dans lequel
- on munit la carte à puce d'une fonction (11) de supervision,
- on protège (22) l'accès à cette fonction par une vérification d'un code d'accès,
- on relie un terminal (2) de commande à la carte à puce, et
- on met en oeuvre (11) la fonction de supervision pour personnaliser la carte à puce,
**caractérisé en ce que**
- on teste (21) une liaison de la carte à puce au terminal pour savoir s'il s'agit d'une première liaison, et
- si c'est une première liaison, on révèle (24) un code d'accès de supervision de la carte à puce.

2. Procédé selon la revendication 1, **caractérisé en ce que**, pour le test de la liaison de la carte à puce au terminal,
- on appelle avec le terminal une fonction de supervision de la carte à puce,
- on teste l'appel (19) de la fonction de supervision pour savoir s'il s'agit d'un premier appel de cette fonction de supervision, et
- si c'est un premier appel, on édite le code d'accès de supervision.

3. Procédé selon l'une des revendications 1 à 2, **caractérisé en ce que**
- on compte le nombre de premières liaisons, et on cesse d'éditer le code d'accès lorsque ce nombre atteint une valeur donnée (N) préenregistrée (13) dans la carte.

4. Procédé selon la revendication 3 **caractérisé en ce que**
- on comptabilise préalablement le nombre de premières liaisons puis on édite le code d'accès lorsque le nombre comptabilisé est inférieur à la valeur préenregistrée.

5. Procédé selon l'une des revendications 1 à 4, **caractérisé en ce que**
- on édite le code d'accès (X Y Z) sur un écran (15) du terminal.

6. Procédé selon l'une des revendications 1 à 5, **caractérisé en ce que**
- on édite le code d'accès dans un fichier de la carte à puce et ou du terminal.

7. Procédé selon la revendication 6, **caractérisé en ce que**
- on verrouille l'accès au fichier après consultation.

8. Procédé selon l'une des revendications 1 à 7, **caractérisé en ce que**
- on chiffre le code d'accès de supervision pour en constituer une cohérence
- et on le déchiffre après édition pour en vérifier la cohérence.

9. Procédé selon l'une des revendications 1 à 8, **caractérisé en ce que**
- on met en oeuvre la fonction de supervision, et
- on modifie le code d'accès.

10. Procédé selon l'une des revendications 1 à 9 **caractérisé en ce que**
- on compose (14) avec le terminal un code d'accès à cette fonction de supervision, et, en cas de succès,
- on met en oeuvre la fonction de supervision pour personnaliser la carte.

## Claims

1. Method of customizing a chip card (1) in which
- the chip card is provided with a supervision function (11),
- access to this function is protected (22) by verification of an access code,
- a control terminal (2) is connected to the chip card, and
- the supervision function is implemented (11) to customize the chip card,
**characterised in that**
- connection of the chip card to the terminal is tested (21) to establish whether it is a first connection, and
- if it is a first connection, an access code for supervision of the chip card is revealed (24).

2. Method according to claim 1, **characterised in that** for testing the connection of the chip card to the terminal,
- a chip card supervision function is called up with the terminal,
- the supervision function call is tested (19) to establish whether it is a first call for this supervision function, and
- if it is a first call, the supervision access code is issued.

3. Method according to one of claims 1 to 2,
**characterised in that**
- the number of first connections is counted and the issuing of the access code is stopped when this number reaches a given value (N) pre-recorded (13) in the card.

4. Method according to claim 3, **characterised in that**
- the number of first connections is ascertained beforehand and then the access code is issued when the ascertained number is less than the pre-recorded value.

5. Method according to one of claims 1 to 4,
**characterised in that**
- the access code (X Y Z) is issued on a screen (15) of the terminal.

6. Method according to one of claims 1 to 5,
**characterised in that**
- the access code is issued in a file of the chip card and or the terminal.

7. Method according to claim 6, **characterised in that**
- access to the file is locked after consultation.

8. Method according to one of claims 1 to 7,
**characterised in that**
- the supervision access code is encrypted to create coherence
- and it is decrypted after issue to verify its coherence.

9. Method according to one of claims 1 to 8,
**characterised in that**
- the supervision function is implemented and
- the access code is modified.

10. Method according to one of claims 1 to 9,
**characterised in that**
- an access code for this supervision function is keyed (14) with the terminal and, in the event of success,
- the supervision function is implemented to customize the card.

## Patentansprüche

1. Verfahren zum Personalisieren einer Chipkarte (1), wobei
- die Chipkarte mit einer Überwachungsfunktion (11) versehen wird,
- der Zugriff auf diese Funktion mittels Verifizierung eines Zugriffscodes geschützt wird (22),
- ein Steuerterminal (2) an die Chipkarte angeschlossen wird und
- die Überwachungsfunktion aktiviert wird (11), um die Chipkarte zu personalisieren,
**dadurch gekennzeichnet, dass**
- eine Verbindung der Chipkarte mit dem Terminal überprüft wird (21), um festzustellen, ob es sich um die erste Verbindung handelt, und
- bei einer ersten Verbindung ein Zugriffscode für die Überwachung der Chipkarte angezeigt wird (24).

2. Verfahren nach Anspruch 1, **dadurch gekennzeichnet, dass** zum Überprüfen der Verbindung der Chipkarte mit dem Terminal
- über das Terminal eine Überwachungsfunktion der Chipkarte aufgerufen wird,
- der Aufruf (19) der Überwachungsfunktion überprüft wird, um festzustellen, ob es sich um einen ersten Aufruf dieser Überwachungsfunktion handelt, und
- bei einem ersten Aufruf der Zugriffscode für die Überwachung ausgegeben wird.

3. Verfahren nach Anspruch 1 oder 2, **dadurch gekennzeichnet, dass**
- die Zahl der ersten Verbindungen gezählt wird und die Ausgabe des Zugriffscodes beendet wird, wenn die Zahl einen vorgegebenen Wert (N) erreicht, der auf der Karte abgespeichert ist (13).

4. Verfahren nach Anspruch 3, **dadurch gekennzeichnet, dass**
- die Zahl der ersten Verbindungen zuerst gezählt wird und dann der Zugriffscode ausgegeben wird, wenn die gezählte Zahl kleiner als der abgespeicherte Wert ist.

5. Verfahren nach einem der Ansprüche 1 bis 4, **dadurch gekennzeichnet, dass**
- der Zugriffscode (x, y, z) über den Schirm (15) des Terminals ausgegeben wird.

6. Verfahren nach einem der Ansprüche 1 bis 5, **dadurch gekennzeichnet, dass**
- der Zugriffscode in eine Datei der Chipkarte und/oder des Terminals ausgegeben wird.

7. Verfahren nach Anspruch 6, **dadurch gekennzeichnet, dass**
- der Zugriff auf die Datei nach Abfrage verriegelt wird.

8. Verfahren nach einem der Ansprüche 1 bis 7, **dadurch gekennzeichnet, dass**
- der Zugriffscode für die Überwachung verschlüsselt wird, um eine Übereinstimmung herzustellen, und nach Ausgabe entschlüsselt wird, um die Übereinstimmung zu verifizieren.

9. Verfahren nach einem der Ansprüche 1 bis 8, **dadurch gekennzeichnet, dass**
die Überwachungsfunktion aktiviert wird und
- der Zugriffscode modifiziert wird.

10. Verfahren nach einem der Ansprüche 1 bis 9, **dadurch gekennzeichnet, dass**
auf dem Terminal ein Zugriffscode zu dieser Überwachungsfunktion eingegeben wird (14) und bei Erfolg
- die Überwachungsfunktion aktiviert wird, um die Karte zu personalisieren.
